# EUROPEAN PATENT APPLICATION

(11) **EP 1 679 888 A1**
(43) Date of publication of application: **12.07.2006**
(21) Application number: 05110180.6
(22) Date of filing: 31.10.2005
(51) Int. Cl.: H04N 5/50, H04N 5/46

(54) **Television tuning apparatus for operating in analogue or digital receiving mode**

(30) Priority: 07.01.2005 KR 2005001846
(71) Applicant: Samsung Electronics Co, Ltd, Suwon-si, Gyeonggi-do 442-742 (KR)
(72) Inventor: Jang, Dae-hyun, Gweonseon-gu, Suwon-si, Gyeonggi-do (KR)
(74) Representative: Geary, Stuart Lloyd

(57) **Abstract**

An image display apparatus capable of analog/digital tuning by a DTV tuner and an analog/digital tuning method thereof are provided. The image display apparatus includes a digital television (DTV) tuner for tuning at least one of an analog signal and a digital signal, a bus switch for switching the DTV tuner to tune at least one of an analog signal and a digital signal, and a control unit for controlling an operation of the bus switch in accordance with at least one mode selected between an analog mode and a digital mode whereby the analog tuning is implemented with a single DTV tuner, so that not only a cost of the analog tuner is reduced but also the design efficiency is increased due to increased space utilization.

## Description

The present invention relates to a tuning apparatus according to the precharacterising part of claim 1 appended hereto.

An image display apparatus displays an image represented by signals transmitted and received from outside. These signals are received using an antenna, a cable and the like. The image can be stored in or played back from memory media. Examples of the image display apparatus generally includes a video cassette recorder (VCR), a digital versatile disc (DVD) playback (reproducing) apparatus, a compact disc (CD) playback apparatus, a hard disk drive (HDD) playback apparatus, a camcorder, a digital camera, a mobile phone, a personal digital assistant (PDA), a television (TV), a set top box or a personal computer (PC).

With the development of DTV (Digital Television) broadcasting, there has been a gradual development and spread of television (TV) as one example of an image display apparatus capable of displaying an image which is received by analogue and digital mixed broadcasting. The image display apparatus capable of supporting both analogue broadcasting and digital broadcasting is called a built-in DTV. Built-in DTV receives analogue and digital broadcasts received from the outside using an antenna.

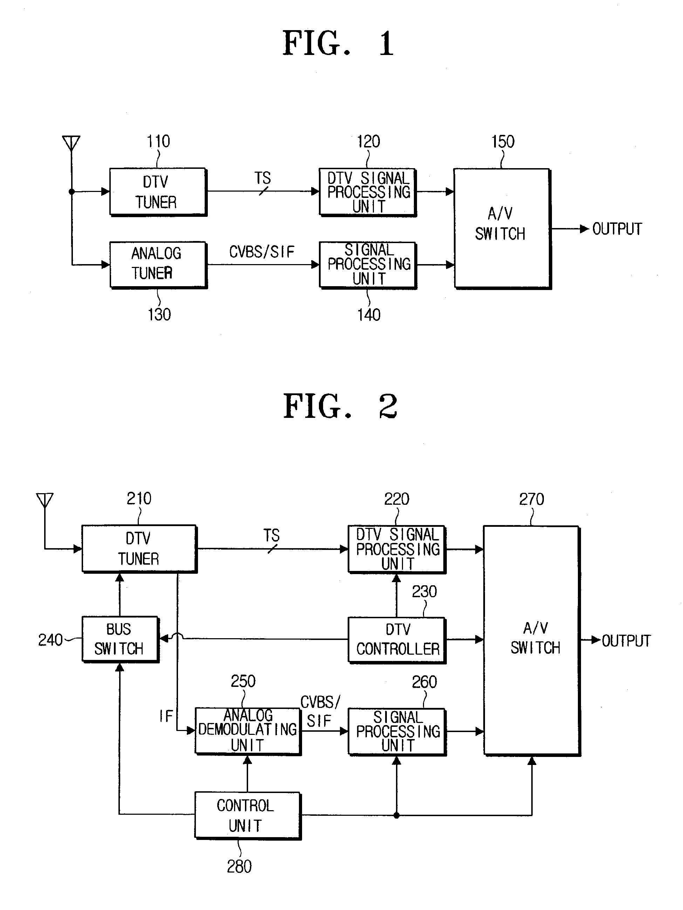

However, the image display apparatus of the prior art which is capable of receiving analogue and digital broadcasts, includes two tuners, i.e. an analogue tuner for receiving the analogue broadcast signal and a digital tuner for receiving the digital broadcast signal. Hereinafter, a known analogue/digital tuning method will be described in detail with reference to Figure 1 which illustrates a block diagram of a known image display apparatus. Referring to Figure 1, the known image display apparatus includes a DTV tuner 110, a DTV signal processing unit 120, an analogue tuner 130, a signal processing unit 140, and an audio/video (A/V) switch 150.

The DTV tuner 110 demodulates an intermediate frequency (IF) signal output generated when a selected broadcast channel is detected and tuned to. The demodulated signal is thus a transport stream (TS) type digital signal. The DTV signal processing unit 120 decodes and demultiplexes the digital signal to thus form an analogue type A/V signal. The analogue tuner 130 demodulates an analogue intermediate frequency (IF) signal obtained by detecting and tuning the frequency band of the selected broadcasting channel to a composite video banking sync/sound intermediate frequency (CVBS/SIF) type signal. The signal processing unit 140 processes colour saturation and sound to thus output an A/V signal. The A/V switch 150 switches to the signal of the two output A/V signals that is to be displayed. The front end of the DTV tuner 110 and the analogue tuner 130 utilising the same radio frequency (RF) range such as very high frequency (VHF) and ultra high frequency (UHF) is a phase locked loop (PLL).

Therefore, using the two tuners increases the cost of the products and reduces design efficiency due to restrictions in space.

According to one aspect of the present invention, there is provided a tuning apparatus according to claim 1 appended hereto.

Other preferred and/or advantageous embodiments are provided in claims 2, 3 and 4 appended hereto.

Further, it is an aspect of the present invention to provide an image display apparatus capable of analog/digital tuning by a DTV tuner providing analog and digital broadcasts by use of a single tuner, and an analog/digital tuning method thereof.

The above aspect of the present invention is substantially realized by providing an image display apparatus comprising: a digital television (DTV) tuner for tuning at least one of an analog signal and a digital signal; a bus switch for switching the DTV tuner to tune at least one of an analog signal and a digital signal; and a control unit for controlling an operation of the bus switch in accordance with at least one mode selected between an analog mode and a digital mode.

In an exemplary embodiment, the bus switch may use an I2C switching method such that if selected the analog mode, switching an analog bus, and if selected the digital mode, switching a digital bus.

In an exemplary embodiment, if a reset mode is selected, the control unit may reset the DTV tuner after receipt of booting completion message from the DTV tuner.

In accordance with another aspect of the present invention, there is provided a method for analog/digital tuning of an image display apparatus, the method comprising: switching for tuning at least one of an analog broadcasting signal and a digital broadcasting signal in accordance with at least one mode selected from an analog mode and a digital mode; and tuning at least one of the analog broadcasting signal and the digital broadcasting signal.

In an exemplary embodiment, the switching may use an I2C switching method such that if the analog mode is selected, switching an analog bus, and if the digital mode is selected, switching a digital bus.

Embodiments of the present invention will now be described, by way of example only, and with reference to Figures 2 to 4 of the accompanying drawings, in which:
Figure 1 is a block diagram of a known image display apparatus;
Figure 2 is a block diagram of an image display apparatus according to an embodiment of the present invention;
Figure 3 is a block diagram of an image display apparatus according to another embodiment of the present invention; and
Figure 4 is a flowchart illustrating a method for analogue/digital tuning of an image display apparatus according to an embodiment of the present invention.

Referring to Figure 2, the image display apparatus of the present invention includes a digital television (DTV) tuner 210, a DTV signal processing unit 220, a DTV controller 230, a bus switch 240, an analogue demodulating unit 250, a signal processing unit 260, an audio/video (A/V) switch 270 and a control unit 280.

The DTV tuner 210 uses orthogonal frequency division multiplexing (OFDM) and a network interface module (NIM). The front end of the DTV tuner is constructed as a phase locked loop (PLL) to thus lock to both an analogue mode and a digital mode.

If the digital mode is selected, the DTV tuner 210 tunes to a digital broadcasting channel selected by a user from the signals received using the antenna. The DTV tuner 210 digitises the broadcast signals of the selected broadcast channel. The DTV tuner 210 detects and tunes to the frequency band of the selected broadcasting channel thereby outputting an IF signal. The DTV tuner 210 includes a demodulator (not shown) to convert the IF signal into a TS type digital signal for output. The digital mode digitizes the broadcasting signal of the selected digital broadcasting channel.

On the other hand, if the analogue mode is selected, the DTV tuner 210 tunes to an analogue broadcasting channel selected by a user from the signals received through the antenna. The DTV tuner 210 tunes to, and downconverts, the analogue broadcasting signals of the selected broadcasting channel. More specifically, the DTV tuner 210 detects and tunes to the frequency band of the selected analogue broadcasting channel to output an IF signal. The analogue mode outputs the selected analogue broadcasting channel as an analogue type signal.

This means that effectively the DTV tuner 210 has a front end that can tune to either a digital or analogue channel. The front-end downconverts the received high frequency signal of either the analogue or digital channel into an appropriate IF signal which is then routed to the appropriate demodulator. So, if the digital mode is selected, the front end of the DTV tuner 210 downconverts the appropriate digital channel signal to an IF signal and feeds the downconverted digital channel signal to the digital demodulator (located as the back end of the DTV tuner 210) to generate a transport stream (TS). Alternatively, if the analogue mode is selected, the front end of the DTV tuner 210 downconverts the appropriate analogue channel to an IF signal and feeds the downconverted analogue channel signal to an analogue demodulator 250 (not located within the DTV tuner 210) to generate a CVBS/SIF signal. The skilled person would appreciate that the back end of the DTV tuner may contain the analogue demodulator

The DTV signal processing unit 220 processes the TS type digital signal generated by the DTV tuner 210 so that the user can view the image. Specifically, the DTV signal processing unit 220 converts and outputs the digital signal into the analogue signal (Y, Pb, Pr/CVBS/Audio Lt, Rt) through decoding, multiplexing and encoding the signal.

The DTV controller 230 implements the digitization by controlling the DTV tuner 210 through a digital bus if the digital mode is selected. To achieve this, the bus switch 240 (which will be described hereafter) acts as a digital I2C. The DTV controller 230 controls the DTV signal processing unit 220 to convert the digital signal into the analogue signal.

The bus switch 240 switches between any one of a digital bus control and an analogue bus control using I2C (I square control or Inter IC control; IIC) switching method. This switching is done in accordance with the mode selected by the user. If the analogue mode is selected, the bus switch 240 switches to an analogue I2C. When the bus switch 240 switches to the analogue I2C, the control unit 280 controls the DTV tuner 210 using an analogue bus. If the digital mode is selected, the bus switch 240 switches to a digital I2C. When the bus switch 240 switches to the digital I2C, the DTV controller 230 controls the DTV tuner 210 using a digital bus.

The analogue demodulating unit 250 demodulates an IF signal output by the DTV tuner 210 when the analogue mode is selected. Thus, the output is a CVBS/SIF type signal. The analogue demodulating unit 250 is separately provided because it has a different structure and operation from the demodulator provided in the DTV tuner 210.

The signal processing unit 260 processes the CVBS/SIF type signal output by the analogue demodulating unit 250 such that the user can view it. Specifically, the signal processing unit 260 processes the saturation adjustment of the CVBS to output it as an RGB (red, green, blue) type signal. The SIF is demodulated so as to output an analogue audio signal.

The A/V switch 270 is switched in accordance with the mode selected by the user, so that either the A/V signal output from the DTV signal processing unit 220 or the A/V signal output from the signal processing unit 260 is output.

Since all the displayed A/V signals are analogue signals, the control unit 280 has priority over the DTV controller 230. Thus, the controller 280 controls the bus switch 240 depending on the mode selected by the user. When the analogue mode is selected, the control unit 280 controls the bus switch 240 to switch to the analogue I2C. When the digital mode is selected, the control unit 280 controls the bus switch 240 to switch to the digital I2C.

When the analogue mode is selected and the bus switch 240 switches to the analogue I2C, the control unit 280 controls the DTV tuner 210 using the analogue bus so that the DTV tuner 210 outputs an analogue signal. The control unit 280 controls the analogue demodulating unit 250 to demodulate the IF signal output by the DTV tuner 210 to thus output the CVBS/SIF type signal. Further, the control unit 280 controls the signal processing unit 260 to process the CVBS/SIF type signal output by the analogue demodulating unit 250 so that the user can view it.

Furthermore, the control unit 280 controls the A/V switch 270 in accordance with the mode selected by the user. When the analogue mode is selected, the control unit 280 controls the A/V switch 270 to output the A/V signal output by the signal processing unit 260. When the digital mode is selected, the control unit 280 controls the A/V switch 270 to output the A/V signal output by the DTV signal processing unit 220.

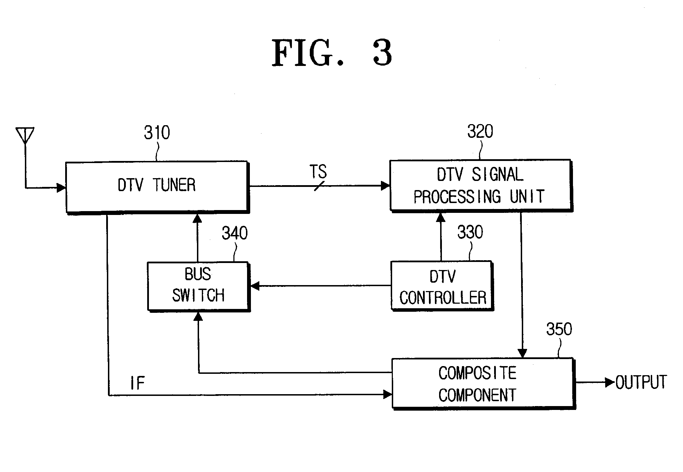

Referring to Figure 3, the image display apparatus includes a DTV tuner 310, a DTV signal processing unit 320, a DTV controller 330, a bus switch 340, and a composite component 350. The DTV tuner 310, the DTV signal processing unit 320, the DTV controller 330, and the bus switch 340 are the same as those elements 210, 220, 230 and 240 illustrated in and explained above with reference to FIG. 2, so that the explanation thereof shall be omitted.

The composite component 350 is integrated into one chip that includes the analogue demodulating unit 250, the signal processing unit 260, the audio/video (A/V) switch 270 and the control unit 280 as illustrated in Figure 2, the operation of this was explained in Figure 2. The construction of one chip type composite component 350 makes it possible to improve a design efficiency and thus to increase the utilisation of the space.

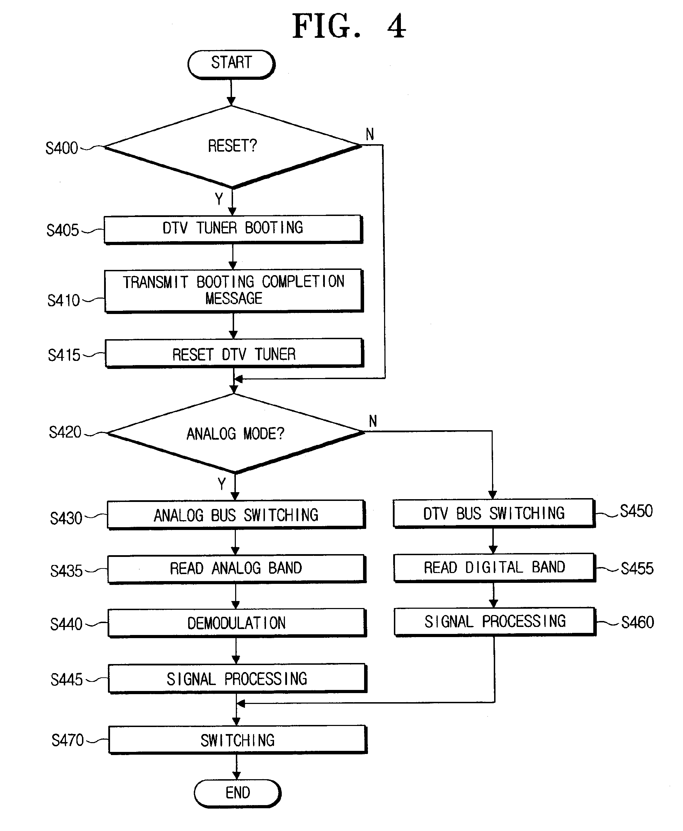

Referring to Figure 4, the control unit 280 determines whether a reset mode is selected by the user (S400). The reset mode initialises the DTV tuner 210.

When the reset mode is selected, the DTV tuner 210 "boots up" (S405). The DTV tuner 210 establishes an default (initial) environment during the booting up process.

When the booting is completed, the DTV tuner 210 transmits a booting completion message to the control unit 280 (S410).

The DTV tuner 210 is reset under the control of the control unit 280 (S415). When the booting completion message is transmitted by the DTV tuner 210, the control unit 280 controls the DTV tuner 210 to reset.

The control unit 280 determines whether the analogue mode is selected by the user (S420). The analogue mode selects an analogue broadcast channel from the analogue broadcast signal.

When the analogue mode is selected, the bus switch 240 switches the analogue bus (S430). If it is determined that the analogue mode is selected, the control unit 280 controls the bus switch 240 to switch to the analogue I2C.

The DTV tuner 210 tunes to the analogue band (S435). Specifically, when the analogue I2C is switched, the control unit 280 controls the DTV tuner 210 to detect and tune to the frequency band of the selected analogue broadcasting channel. An IF signal is subsequently output.

The analogue demodulating unit 250 demodulates, under the control of the control unit 280, the IF signal output by the DTV tuner 210 to output a CVBS/SIF type signal (S440).

The signal processing unit 260 processes the CVBS/SIF type signal output by the analogue demodulating unit 250 such that the user can view it (S445). To be specific, the signal processing unit 260 processes CVBS to have the saturation adjustment to thus output the RGB type signal. The signal processing unit 260 demodulates SIF so as to output it as analogue audio type signal, under the control of the control unit 280.

In the operation S420, when the digital mode is selected, the bus switch 240 switches the digital bus (S450). If it is determined that the digital mode is selected, the control unit 280 controls the bus switch 240 to switch to the digital I2C. The digital mode digitises the broadcast channel selected from broadcasting signal.

The DTV tuner 210 reads the digital band (S455). Specifically, when the bus switch 240 switches to the digital I2C, the DTV controller 230 controls the DTV tuner 210 to detect and tune to the frequency band of the selected broadcasting channel. Thus, an IF signal is output. The DTV tuner 210 converts the IF signal, under the control of the DTV controller 230, into a TS type digital signal using the demodulator.

The DTV signal processing unit 220 processes the TS type digital signal converted by the DTV tuner 210 allowing the user to view (S460). Specifically, the DTV signal processing unit 220 converts and outputs, under the control of the DTV controller 230, the digital signal as the analogue signal (Y, Pb, Pr/CVBS/Audio Lt, Rt) by decoding, demuxing and encoding.

The A/V switch 270 switches between an A/V signal output from the DTV signal processing unit 220 and an A/V signal output from the signal processing unit 260 (S470) depending on the mode selected by the user. In the step S420, when the analogue mode is selected, the control unit 280 controls the A/V switch 270 to output the A/V signal output by the signal processing unit 260. In the step S420, when the digital mode is selected, the control unit 280 controls the A/V switch 270 to output the A/V signal output by the DTV signal processing unit 220.

As described above, in accordance with the present invention, the analogue broadcasting is implemented with a single DTV tuner, so that not only a cost of the analogue tuner is reduced but also the design efficiency is improved to thus increase space utilisation. Since a coaxial cable for connecting two tuners is not required, there is little signal interference or attenuation and a manufacturing cost is reduced.

## Claims

1. A television tuning apparatus capable of operating in either an analogue or digital receiving mode, the apparatus comprising tuning means (210, 310) capable of tuning to an analogue and a digital television channel signal and outputting the tuned analogue and digital signal, an analogue signal demodulator (250) for demodulating the tuned analogue television channel signal and a digital signal demodulator for demodulating the tuned digital television channel signal, **characterised in that** the tuning means (210, 310) is operable to selectively output the tuned analogue/digital signal to either the analogue demodulator (250) or the digital demodulator, respectively, in dependence on the operating mode of the television tuning apparatus.

2. A television tuning apparatus according to claim 1 wherein the tuning means (210, 310) comprises one of the demodulators.

3. An apparatus according to either one of claims 1 or 2, comprising switching means (340) for generating an operating mode signal in dependence on the operating mode of the tuning apparatus for tuning the tuning means (310) to either the analogue or digital television channel.

4. An apparatus according to claim 3, comprising a control means (330) for controlling the generation of the output mode signal from the switching means (340).

5. An image display apparatus comprising:
a digital television (DTV) tuner which tunes at least one of an analog signal and a digital signal;
a bus switch which switches the DTV tuner to tune the at least one of the analog signal and the digital signal; and
a control unit which controls an operation of the bus switch in accordance with at least one mode selected between an analog mode and a digital mode.

6. The image display apparatus as claimed in claim 5, wherein the bus switch uses an I-squared-C (I2C) switching method such that if the analog mode is selected, the bus switch switches to an analog bus, and if the digital mode is selected, the bus switch switches to a digital bus.

7. The image display apparatus as claimed in claim 5, wherein if a reset mode is selected, the control unit resets the DTV tuner in response to receipt of a booting completion message from the DTV tuner.

8. A method for analog/digital tuning of an image display apparatus, the method comprising:
switching for tuning at least one of an analog broadcasting signal and a digital broadcasting signal in accordance with at least one mode selected from an analog mode and a digital mode; and
tuning at least one of the analog broadcasting signal and the digital broadcasting signal.

9. The method as claimed in claim 8, wherein the switching for tuning uses an I-squared-C (I2C) switching method such that if the analog mode is selected, the switching for tuning comprises switching to an analog bus, and if the digital mode is selected, the switching for tuning comprises switching to a digital bus.

10. The image display apparatus as claimed in claim 5, wherein the DTV tuner is operable to tune the analog signal and the digital signal.

11. The image display apparatus as claimed in claim 10, wherein the DTV tuner outputs an intermediate frequency signal if the DTV tuner tunes the analog signal and outputs a transport stream signal if the DTV tuner tunes the digital signal.
